# EUROPÄISCHE PATENTSCHRIFT

(11) **EP 2 818 527 B1**
(45) Veröffentlichungstag und Bekanntmachung des Hinweises auf die Patenterteilung: **14.12.2016**
(21) Anmeldenummer: 13176092.8
(22) Anmeldetag: 11.07.2013
(51) Int. Cl.: C08K 9/06, C08K 3/36, C09J 11/04, C09J 7/02

(54) **Klebeband, insbesondere doppelseitiges Klebeband, und dessen Verwendung zum Bekleben unpolarer Oberflächen**
Adhesive tape, in particular double-sided adhesive tape, and its use as adhesive for non-polar surfaces
Bande adhésive, notamment bande adhésive à double face, et son utilisation pour coller des surfaces non polaires

(30) Priorität: 24.06.2013 DE 102013106576; 24.06.2013 DE 202013102733 U
(43) Veröffentlichungstag der Anmeldung: 31.12.2014
(73) Patentinhaber: Coroplast Fritz Müller GmbH & Co. KG, 42279 Wuppertal (DE)
(72) Erfinder: Lodde, Christoph, 59439 Holzwickede (DE); Kura, Frank, 40670 Meerbusch (DE)
(74) Vertreter: Patent- und Rechtsanwälte Dr. Solf & Zapf

(56) Entgegenhaltungen:
- EP-A1- 1 262 532
- EP-A1- 2 551 102
- WO-A1-2006/065373
- US-A1- 2004 266 905

## Beschreibung

Die vorliegende Erfindung betrifft ein Klebeband, insbesondere ein doppelseitiges Klebeband, mit einem aus Kunststoff bestehenden Träger, der mindestens auf einer Seite mit einer selbstklebenden Klebeschicht versehen ist, die aus einem druckempfindlichen Haftkleber besteht, wobei der druckempfindliche Haftkleber pulverförmiges nanoskaliges Siliciumdioxid enthält, und wobei der aus Kunststoff bestehende Träger als Folie ausgeführt ist.

In der EP 1 262 532 A1 wird ein ähnliches Klebeband beschrieben, welches eine Kleber-Doppelschicht aus einem hitzereaktivierbaren Klebefilm und eine druckempfindliche Acrylat-Klebeschicht aufweist, die obligatorisch aneinander gebunden sind. Eine Einzelschicht ist nicht offenbart. Die beschriebenen Klebemassen sind im Allgemeinen als sogenannte "Self-Stick-Foams" bekannt, wobei die Klebemassen der Kleber-Doppelschicht zwar doppelseitig kleben, aber keinen Träger haben. Bei der druckempfindlichen Acrylat-Klebeschicht handelt es sich um eine Klebermasse, die mit Hilfe von UV-Polymerisation hergestellt wird. Zu diesem Zweck wird dem Monomer in einem bestimmten Verhältnis ein separater Fotopolymerisator zugesetzt. Ähnliche Self Stick Foams werden auch in der EP 2 551 103 A1 beschrieben. Auch hier wird der eingesetzte Acrylat-Kleber mit Hilfe einer Polymerisation gebildet.

Ein Klebeband der eingangs genannten Art ist aus der WO 2006/065373 A1 bekannt. Beim Gegenstand der o. g. Patentanmeldung handelt es sich um einen optisch klaren druckempfindlichen Kleber. Die beschriebene Klebemasse wird durch eine Polymerisation ausgebildet.

Die DE 103 12 031 A1 beschreibt eine dezidiert schwer entflammbare Haftklebemasse, welche mindestens eine Acrylat-Klebstoffkomponente, mindestens eine Ammoniumpolyphosphat-Komponente und mindestens eine Harz-Komponente umfasst. Die bekannte Haftklebemasse setzt sich vorzugsweise aus mindestens 35 Gew.-% der Acrylat-Klebstoffkomponente, mindestens 25 Gew.-% Ammoniumpolyphosphat, insbesondere 30 bis 40 Gew.-%, sowie mindestens 25 Gew.-% der Harz-Komponente zusammen. Hauptverantwortlich für die Inhibierung der Entflammbarkeit der aus der DE 103 12 031 A1 bekannten Haftklebemasse ist dabei die Präsenz der Ammoniumpolyphosphat-Komponente. Auch die Herstellung von doppelseitigen Klebebändern wird in der DE 103 12 031 A1 beschrieben, wobei die Auftragung im Hotmelt ausschließlich auf textile, aus Kunststofffasern gebildete Träger, wie auf Vliese, insbesondere PET-Vliese, Gewebe oder sogenannte Gewebevliese vorgenommen wird. Für die Acrylat-Klebstoffkomponente wird eine Vielzahl von geeigneten Zusammensetzungen beschrieben, wobei diese Komponente vorzugsweise durch Copolymerisation verschiedener Comonomere hergestellt werden kann. In einer bevorzugten Ausführung der Haftklebemasse ist dabei vorgesehen, dass mindestens ein Comonomer ein Photoinitiator mit einer copolymerisierbaren Doppelbindung ist. Hierbei ermöglichen es einpolymerisierte fotoreaktive Gruppen, dass bei Bestrahlung mit ultravioletter Strahlung eine Reaktion der Kette mit Nachbarketten stattfinden kann, so dass eine Vernetzungsstruktur entsteht, wie sie für Haftklebstoffe, insbesondere für druckempfindliche Haftkleber mit UV-vernetzbarem Acrylat als Hauptbestandteil, typisch ist.

Ein Schlüsselparameter für ein Klebeband ist seine Klebkraft, für die je nach Anwendungsfall unterschiedliche Größen erforderlich sein können. Zur Bestimmung derselben werden oft Standardmethoden eingesetzt, wie beispielsweise die Bestimmung der Klebkraft auf Stahl nach DIN EN 1939 (Stand 2003). Auch gemäß der DE 103 12 031 A1 wurde die Klebkraft auf Stahl ermittelt, jedoch nach einer nicht genormten speziellen Methode, die in dem genannten Dokument beschrieben ist. Für verschiedene exemplarisch beschriebene Ausführungen lag die solchermaßen ermittelte Klebkraft auf Stahl im Bereich von 8,0 N/cm bis 8,7 N/cm. Diese Werte wurden in dem Dokument als eine Verbesserung der Klebkraft gegenüber herkömmlichen Klebemassen gewertet.

Anmeldungsgemäß wird unter moderater Klebkraft eine Klebkraft im Bereich von 0,5 N/cm bis 4,0 N/cm nach DIN EN 1939 verstanden, unter erhöhter Klebkraft eine Klebkraft im Bereich von 4,0 N/cm bis 10,0 N/cm nach DIN EN 1939. Eine derartige differenzierte Klebkraftbetrachtung spielt insbesondere dann eine Rolle, wenn es um die Verklebung von unpolaren Oberflächen geht.

Ein weiterer Schlüsselparameter für ein Klebeband ist seine Scherfestigkeit. Insbesondere dort, wo ein Klebeband in einer Ausführung als doppelseitiges Klebeband unterschiedliche Bauteile miteinander verbinden soll, werden für die Scherfestigkeit hohe Werte gefordert, wobei zur Bestimmung derselben ebenfalls oft Standardmethoden eingesetzt werden, wie beispielsweise die Bestimmung der Scherfestigkeit nach DIN EN 1943 (Stand 2002).

Anmeldungsgemäß wird unter moderater Scherfestigkeit eine Scherfestigkeit im Bereich von 100 Minuten bis 1.000 Minuten nach DIN EN 1943, und unter erhöhter Scherfestigkeit eine Scherfestigkeit im Bereich von 1.000 Minuten bis 10.000 Minuten nach DIN EN 1943 verstanden. Unter einem sehr hohen Scherfestigkeitsbereich versteht man Werte von über 10.000 Minuten, wobei das genaue Ende der Messung im Regelfall nicht festgehalten werden kann.

Der Erfindung liegt die Aufgabe zugrunde, ein Klebeband der eingangs genannten Art zu schaffen, das bei Wahrung der Vorteile des Einsatzes von UV-vernetzbaren Acrylaten in der Klebebeschichtung und Gewährleistung einer zumindest moderaten, vorzugsweise bei Gewährleistung einer erhöhten Klebkraft auf Stahl, auch eine zumindest moderate, vorzugsweise erhöhte Klebkraft, auf unpolaren Oberflächen sowie vorzugsweise eine erhöhte Scherfestigkeit aufweist.

Unter einer unpolaren oder apolaren Oberfläche wird dabei anmeldungsgemäß eine solche Oberfläche verstanden, die aus Stoffen gebildet ist, die kein permanentes Dipolmoment besitzen. Ein Dipolmoment ergibt sich dabei in einem Molekül einerseits aus der Elektronegativitätsdifferenz der miteinander verbundenden Atome, welche die Bindungspolarität bestimmt, und andererseits aus der Symmetrie des Moleküls. Letztere kann, wie beispielsweise in Polytetrafluorethylen (PTFE), den Dipolcharakter von stark polaren chemischen Bindungen im Molekül wieder völlig aufheben. Von besonderer technischer Bedeutung für den Anwendungsbereich der erfindungsgemäßen Klebebänder sind dabei aliphatische Oberflächen, wie die von Polyethylen oder Polypropylen, welche sich mit herkömmlichen Klebebändern schlechter verkleben lassen als Oberflächen, in denen sich Dipolmoleküle befinden.

Stahl kann aufgrund der in ihm vorliegenden metallischen Bindung, welche durch das Vorhandensein freier Elektronen gekennzeichnet ist, nicht als unpolare Oberfläche aufgefasst werden. Daher sind auch auf Stahl bestimmte Klebkraftwerte nicht repräsentativ für an apolaren Oberflächen auftretende Klebkräfte, und technische Maßnahmen zur Erhöhung der Klebkraft auf Stahl sind nicht unmittelbar auf eine Erhöhung der Klebkraft auf apolaren Oberflächen übertragbar.

Das der Erfindung zugrunde liegende Problem wird dadurch gelöst, dass der druckempfindliche Haftkleber ein vernetztes Polyacrylat aus einem lösungsmittelfreien UV-vernetzbaren Acrylat mit einpolymerisiertem Fotoinitiator als Hauptbestandteil für eine Vernetzungsreaktion enthält, wobei der Gehalt an Siliciumdioxid - bezogen auf das UV-vernetzbare Acrylat - im Bereich von 1 phr bis 20 phr liegt und wobei der Kleberauftrag der selbstklebenden Klebeschicht (3) im Bereich von 20 g/m² bis 100 g/m² liegt.

Unter dem Begriff "Folie" wird im Rahmen der Anmeldung - wie auch im allgemeinen Verständnis - ein sehr dünnes, insbesondere bandförmig ausgebildetes, Blatt verstanden, wobei der Träger insbesondere eine Dicke im Bereich von 0,005 mm bis 0,5 mm, vorzugsweise im Bereich von 0,01 mm bis 0,3 mm, aufweisen kann. Im Gegensatz zu den aus dem oben gewürdigten Stand der Technik bekannten textilen Trägern wird dadurch mit Vorteil eine durchgehende, ununterbrochene, einheitliche Klebefläche ausgebildet. Der Träger kann dabei vorzugsweise aus Polyvinylchlorid oder aus Polyester bestehen, die sich gut zu auch beidseitig leicht mit der Klebebeschichtung beschichtbaren Folien verarbeiten lassen. Jede Klebeschicht wird dabei jeweils mit einem spezifischen Flächengewicht von 20 g/m² bis 100 g/m² auf den Träger aufgetragen.

Unter dem Begriff "nanoskalig" werden anmeldungsgemäß Größenbereiche bis zu einem Durchmesser der Teilchen im SiO₂-Pulver von maximal 1000 nm subsumiert. Eine mittlere Teilchengröße des pulverförmigen Siliciumdioxids kann dabei (insbesondere bei unimodaler Normalverteilung der Teilchengröße) insbesondere im Bereich 5 nm bis 250 nm, vorzugsweise im Bereich von 10 nm bis 80 nm, liegen.

Zur Bestimmung der Größe von nanoskaligen Teilchen sind verschiedene Methoden üblich. Eine solche Methode ist z. B. die Bestimmung der mittleren Teilchengröße in Dispersion, wie sie beispielsweise in der Literaturstelle "The ultimate in desktop particle characterization", Verlag Malvern Instruments, Erscheinungsjahr 2003, und "Particle Size Measurement"; T. Allen 4th Edition 1992, ISBN 04123570 and 5th Edition, 1997, ISBN 0412729504 beschrieben wird. Es können zur Teilchengrößenbestimmung aber auch andere vergleichbare und übliche Messmethoden herangezogen werden, beispielsweise "Dynamic Light Scattering (DLS)" (Dr. Michael Kaszuba & Dr. Kevin Mattison "High concentration particle size measurements using dynamic light scattering" Lab Plus international - September 2004, und Dahneke BE. "Measurement of Suspended Particles by Quasielastic Light Scattering", 1983, Wiley). Die Ergebnisse der verschiedenen üblichen Messmethoden differieren jedoch nur so wenig voneinander, dass die entsprechenden Unterschiede nicht von Relevanz für die Erfindung sind.

Als besonders geeignet wird pulverförmiges Siliciumdioxid mit einer BET-Oberfläche im Bereich von 50 m²/g bis 500 m²/g, vorzugsweise im Bereich von 80 m²/g bis 200 m²/g angesehen. Die BET-Oberfläche wird im Rahmen einer BET-Messung (BET steht dabei Brunauer, Emmett und Teller, die Urheber des Verfahrens) bestimmt, bei der es sich um ein Analyseverfahren zur Größenbestimmung der Oberfläche von porösen Festkörpern mittels Gasadsorption handelt. Dieses Verfahren wird standardmäßig nach der DIN ISO 9277:2003-05 "Bestimmung der spezifischen Oberfläche von Feststoffen durch Gasadsorption nach dem BET-Verfahren" (ISO 9277:1995) durchgeführt. Die BET-Oberfläche und die mittlere Korngröße der Siliciumdioxidteilchen im Pulver verhalten sich dabei gegenläufig, wobei mit kleiner werdender Teilchengröße die BET-Oberfläche überproportional zunimmt.

Bei dem pulverförmigen nanoskaligen Siliciumdioxid kann es sich vorteilhafterweise um ein solches handeln, das pyrogen aus flüchtigen Chlorsilanen, wie Siliciumtetrachlorid SiCl₄, in einer Knallgasflamme oder durch Zerstäubung von Quarzsand im elektrischen Lichtbogen hergestellt wird. Es wird in der Praxis auch oft als "pyrogene Kieselsäure" (engl.: fumed silica) bezeichnet. Chemisch gesehen besteht "pyrogene Kieselsäure" aus hochreinem amorphem Siliciumdioxid. Es ist also, obwohl es in Wasser sauer reagiert, genau genommen keine Säure, sondern ein Säureanhydrid. Derartig hergestelltes Siliciumdioxidpulver hat das Aussehen von lockerem weißem Pulver.

Als Kleberbestandteil erfindungsgemäß einsetzbares pulverförmiges nanoskaliges Siliciumdioxid ist beispielsweise unter den Markennamen Aerosil^{®} der Firma Evonik Industries, Cab-O-Sil^{®} der Firma Cabot Corporation oder HDK^{®}-pyrogene Kieselsäure der Firma Wacker Chemie im Handel. Diese Produkte werden bekanntermaßen zur Herstellung von z. B. in Bädern einsetzbaren Silikondichtungsmassen und in Autolacken sowie Schiffsfarben eingesetzt. Dabei bewirkt das pyrogene Oxid u. a. Thixotropie, geringe Feuchtigkeitsaufnahme, mechanische Festigkeit und die Optimierung rheologischer Eigenschaften, wie die Verdickung von Fetten und Ölen. Pyrogene Oxide finden bekanntermaßen beispielsweise auch in der Kosmetikindustrie, z. B. in Lippenstiften, Cremes und Deodoranten, und in der Elektronikindustrie Verwendung.

Erfindungsgemäß wurde überraschenderweise gefunden, dass ohne Abfall der Klebkraft des Klebebandes dessen Scherfestigkeit bei erhöhten Temperaturen auf ein extremal hohes Niveau angehoben werden kann. So liegt typischerweise erfindungsgemäß eine nach DIN EN 1943 bei 70 °C gemessene Scherfestigkeit nach einer Wartezeit von 15 Minuten in einem Bereich, der mit einem Wert von mehr als 10.000 Minuten den o. g. Bereich der erhöhten Scherfestigkeit (1.000 Minuten bis 10.000 Minuten) noch übersteigt und somit entsprechend den zugrunde gelegten Definitionen eine sehr hohe Scherfestigkeit darstellt.

Der Gehalt an Siliciumdioxid, insbesondere der Gehalt an pyrogener Kieselsäure, liegt bezogen auf das UV-vernetzbare Acrylat im Bereich von 1 phr bis 20 phr, vorzugweise im Bereich von 2 bis 10 phr. Schon geringe Anteile des Siliciumdioxids bewirken im Zusammenwirken mit dem UV-vernetzbaren Acrylat auf dem Träger einen sehr starken Effekt.

Hydrophiles pyrogen hergestelltes Siliciumdioxid wird von Wasser benetzt und kann in Wasser und - was für die Erfindung von Bedeutung ist - in dem als druckempfindlicher Haftkleber eingesetzten, nichtwässrigen UV-vernetzbaren Acrylat problemlos dispergiert werden.

Letzteres trifft allerdings auch für hydrophobes bzw. durch Oberflächenbehandlung hydrophobisiertes Siliciumdioxid zu, so dass auch dieses im Rahmen der Erfindung mit Vorteil einsetzbar ist. Eine derartige Hydrophobisierung kann sogar, wenn sie mit Organosilanen, wie beispielsweise mit Dimethyldichlorsilan, Hexamethyldisilazan, Methacryloxypropyltrimethoxysilan, Octyltrimethoxysilan, Polysiloxan, Hexadecyltrimethoxysilan, vorgenommen wird, die adhäsive Einbindung der Silciumdioxidteilchen in die Acrylat- bzw. Polyacrylatmasse - einschließlich in darin gegebenenfalls vorhandene Harze - außerordentlich begünstigen und wirkt vernetzungsfördernd, indem die hydrophobe Oberflächenschicht der Silciumdioxidteilchen mit in die Molekülstruktur der bei sich bei der UV-Vernetzung bildenden Polyacrylate chemisch eingebunden wird.

Was die Klebstoffbeschichtung betrifft, so werden erfindungsgemäß lösungsmittelfreie UV-vernetzbare Acrylatklebstoffe als druckempfindliche Haftklebstoffe eingesetzt. Dies trägt dazu bei, dass sich das erfindungsgemäße Klebeband durch eine hohe Resistenz gegen verschiedene Chemikalieneinflüsse, eine außerordentlich hohe Beständigkeit gegenüber Alterungsprozessen und durch eine ausgezeichnete Kompatibilität mit verschiedenen zu verklebenden Bauteilen, insbesondere auch mit unpolaren Oberflächen auszeichnet.

Derartige UV-vernetzbare Haftklebstoffe werden beispielsweise in verschiedenen Ausführungsarten unter dem Namen acResin^{®} von der BASF im Handel vertrieben. Diese können bei Temperaturen von 120 °C auf herkömmlichen Hotmelt-Coatern verarbeitet werden, die zusätzlich mit UV-Lampen ausgestattet sind. Spezielle Trocknungsanlagen sind nicht erforderlich. Im Vergleich mit lösungsmittelhaltigen Acrylatklebern weist eine Klebebeschichtung auf der Basis derartiger Haftklebstoffe wegen der darin enthaltenen minimalen Menge von migrationsfähigen Inhaltsstoffen nur eine geringe Ausgasung flüchtiger Substanzen auf, die im sogenannten Fogging-Test ermittelt werden kann. Entsprechend den Herstellerangaben werden die Polymerketten der acResin^{®} UV-Acrylate aus den gleichen Acrylatmonomeren hergestellt, die auch bei den üblichen Haftklebstoffsystemen auf Dispersions- oder Lösemittelbasis Verwendung finden. Bei der Bestrahlung mit UV-C-Licht (250 nm - 260 nm) aus handelsüblichen UV-Strahlern bzw. Lampen wird eine einpolymerisierte UV-C-reaktive Gruppe zur Vernetzungsreaktion mit einer benachbarten Acrylatkette angeregt. Die UV-Vernetzung läuft extrem schnell ab, ist genau kontrollierbar und erfolgt nur so lange, wie das UV-Licht angeboten wird. Die einpolymerisierte fotoreaktive Gruppe in der Seitenkette des acResin^{®} UV-Polymeren reagiert dabei mit einer beliebigen C-H-Gruppe einer Nachbarkette. Besonders aktivierte Bindungen oder gar Doppelbindungen sind nicht erforderlich. Im Gegensatz zur UV-Härtung mit zugemischten Fotoinitiatoren treten durch chemische Anbindung der UV-C-fotoreaktiven Gruppe an die Polymerkette keine migrationsfähigen Restbestandteile auf. Mit zunehmender UV-C-Bestrahlung des Haftklebstofffilmes nimmt der Vernetzungsgrad des Acrylatpolymers zu, und der Haftklebstoff gewinnt an Kohäsion. Gleichzeitig werden dabei Adhäsion und Tack reduziert. Wird ein doppelseitiges Klebeband jedoch mit einem derartigen Standard acResin-Kleber^{®} ohne den erfindungsgemäß vorgesehenen Zusatz hergestellt, so werden auch - wie nachfolgend noch im Detail als Vergleichsbeispiele ausgeführt wird - insbesondere auf unpolaren Oberflächen die erfindungsgemäß erzielbaren hohen Werte der Scherfestigkeit und der Klebkraft nicht erreicht.

Erfindungsgemäß kann mit Vorteil vorgesehen sein, den Haftkleber der selbstklebenden Klebeschicht durch Zusatz von Weichmachern, Acrylat-Comonomeren und/oder von Polyvinyl-Ether sowie insbesondere von Harzen zur Eigenschaftsverbesserung zu modifizieren.

So gibt es eine Vielzahl von Klebharzen, die für lösungsmittelhaltige Acrylat-Klebebeschichtungen bekanntermaßen als zusetzbar und eigenschaftsverbessernd angesehen werden. Stellvertretend für solche Harze seien dabei Pinen-, Inden- und Kolophoniumharze, deren disproportionierte, hydrierte, polymerisierte, veresterte Derivate und Salze, aliphatische und aromatische Kohlenwasserstoffharze, Terpenharze und Terpenphenolharze sowie C5- bis C9- Kohlenwasserstoffharze genannt. Auch Kombinationen dieser und weiterer, mit dem entsprechenden Polyacrylat kompatibler aliphatischer, aromatischer und/oder alkylaromatischer Harze werden eingesetzt, um die Eigenschaften der resultierenden Klebemasse wunschgemäß zu beeinflussen.

Es hat sich gezeigt, dass die vorstehend genannten acResin^{®} UV-Produkte es ebenfalls grundsätzlich zulassen, mit derartigen Harzen abgemischt zu werden, um beispielsweise die Klebkraft der Klebeschicht zu erhöhen. Jedoch ist es dabei ungünstigerweise möglich, dass das Harz je nach seiner Natur mehr oder weniger die zur Vernetzung bestimmte UV-Strahlung absorbiert, so dass die Strahlung nicht mehr in ausreichender Weise zur Vernetzung des Acrylats zur Verfügung steht, wenn nicht die UV-C-Dosis erhöht wird. Auch führt die Modifikation des acResin^{®} UV-Acrylats mit Harz zu einer nachteilhaften Verdünnung der darin enthaltenen UV-C-reaktiven Gruppen, was ebenfalls durch eine höhere UV-C-Dosis ausgeglichen werden muss, um die gleiche Vernetzungsdichte wie in einer nicht mit Harz modifizierten Klebeschicht einzustellen. Diesen Erscheinungen kann dadurch entgegengewirkt werden, dass der Harzgehalt bezogen auf das UV-vernetzbare Acrylat in einem Vorzugsbereich von nur 2 phr bis 10 phr liegt, wobei aber grundsätzlich ein Harzgehalt im Bereich von 1 phr bis 50 phr möglich ist.

In den erfindungsgemäß bevorzugten Ausführungen werden insbesondere ein aliphatisches C5-Harz (Escorez 1304 der Firma Exxon), ein hydriertes KolophoniumEster-Harz (Foral 105 der Firma Eastman) und ein aromatisches C8/C9-Kohlenwasserstoffharz (Kristalex F 100 der Firma Eastman) als besonders geeignet angesehen, um durch ihre Compoundierung mit dem UV-vernetzbaren Acrylat bei gleichbleibender Gewährleistung der erfindungsgemäß erzielbaren hohen Werte der Scherfestigkeit zusätzlich eine Klebkraftsteigerung, insbesondere auf unpolaren Oberflächen zu erzielen.

Aufgrund dessen, dass die Beimengung von Harzen der vorstehend genannten Art zwar an sich für wässrige Acrylat-Kleber-Formulierungen bekannt war, jedoch ihre die Klebkraft spezifisch auf apolaren Oberflächen erhöhende Wirkung in selbstklebenden Klebeschichten auf der Basis von druckempfindlichen lösungsmittelfreien Haftklebern, die als Hauptbestandteil ein UV-vernetzbares Acrylat, insbesondere mit einpolymerisiertem Fotoinitiator enthalten, in der Fachwelt nicht erkannt wurde und für den Fachmann überraschend war, wird auch einem Klebeband der eingangs genannten Art, das im druckempfindlichen Haftkleber kein pulverförmiges nanoskaliges Siliciumdioxid enthält, jedoch einen aus Kunststoff bestehenden Folienträger aufweist, und das die genannten Harze, insbesondere in Mengen enthält, die im angegebenen Vorzugsbereich liegen, eine eigenständige erfinderische Bedeutung beigemessen.

Die UV-C-Dosis, welche bei einem Kleberauftrag im Bereich von 20 g/m² bis 100 g/m², vorzugsweise bei einem Kleberauftrag im Bereich 35 g/m² bis 100 g/m², im Bereich von 5 mJ/cm² bis 135 mJ/cm², vorzugsweise im Bereich von 25 mJ/cm² bis 80 mJ/cm² liegen sollte, lässt sich dabei über insgesamt fünf Parameter steuern.

Diese Parameter sind:
a) der UV- Lampen Typ (dotierte UV- Lampen und nicht dotierte UV- Lampen),
b) die Art und Weise der Reflektoren in den UV- Lampen,
c) die Anzahl der UV- Lampen, welche hintereinander geschaltet werden, um möglichst hohe Produktionsgeschwindigkeiten zu erreichen
d) die Geometrie der UV- Statuseinheit, insbesondere der Abstand der UV- Lampen zur Beschichtungsbahn,
e) die Beschichtungsgeschwindigkeit, bzw. sich daraus ergebend die Durchlaufgeschwindigkeit der Klebeschicht unter der UV-Strahler-Einheit.

Was den unter a) genannten Parameter betrifft, so kann die Strahlungsdosis durch den Typ und die Leistung der verwendeten UV-Lampen beeinflusst werden, wobei dem Emissionsspektrum dieser Lampen, insbesondere im Wellenlängenbereich zwischen 250 nm und 260 nm (UV-C-Anteil), besondere Bedeutung zukommt, um eine möglichst hohe und somit kostengünstige UV-Vernetzungsausbeute zu erzielen. Generell ist bei marktüblichen UV-Lampen der UV-C-Anteil umso größer, je höher die Strahlungsleistung der Lampe ist. So ist eine Lampe mit z. B. 200 W/cm wirtschaftlicher als eine vergleichbare Einheit mit 120 W/cm, da vergleichbare Vernetzungsdichten in deutlich kürzerer Zeit, d. h. bei höherer Durchlaufgeschwindigkeit der Klebeschicht unter der UV-Strahler-Einheit, erreicht werden können. Erfindungsgemäß können beispielsweise mit Vorteil entsprechende Reflektorsysteme der Firma IST Metz GmbH (mit sogenannten CMK- und URS^{®}-Reflektoren, wobei die Abkürzung CM für "Cold Mirror" steht) oder Kaltlichtreflektoren der Fa. Dr. Hönle AG eingesetzt werden. Derartige Reflektoren weisen als besondere Eigenschaft auf, dass sie die UV-Strahlung reflektieren und die IR-Wärmestrahlung transmittieren, insbesondere hin zu einem wassergekühlten Absorberprofil, wo sie effektiv abgeführt kann, oder in eine spezielle Absorberschicht. Dadurch wird eine schonende Verarbeitung wärmeempfindlicher Materialien begünstigt.

Neben der erfindungsgemäß nicht geminderten, auch für nicht erfindungsgemäße Klebebänder charakteristischen Klebkraft auf Stahl, die gemessen nach DIN EN 1939 nach einer Wartezeit von 10 Minuten und/oder nach einer Wartezeit von 24 Stunden im Bereich von 6,0 bis 18,0 N/cm, vorzugsweise im Bereich von 7,0 bis 15,0 N/cm liegen kann, kann erfindungsgemäß die Scherfestigkeit gemessen nach DIN EN 1943 nach einer Wartezeit von 15 Minuten, sowohl bei Raumtemperatur, als auch bei 70 °C, im Bereich von 250 Minuten bis 10.000 Minuten liegen und vorzugsweise, wie bereits ausgeführt, 10.000 Minuten übersteigen, wobei die Klebkraft auf unpolaren Oberflächen, wie auf Polyethylen- oder Polypropylenoberflächen, gemessen nach DIN EN 1939 nach einer Wartezeit von 10 Minuten und/oder nach einer Wartezeit von 24 Stunden mindestens 2,0 N/cm beträgt und vorzugsweise in einem Bereich von mehr als 3,0 N/cm liegt, wobei sie aber insbesondere dann, wenn die vorstehend erläuterte zusätzliche Harzmodifikation des UV-vernetzbaren Acrylates vorgenommen wird, Spitzenwerte von bis zu bis 10,0 N/cm erreicht.

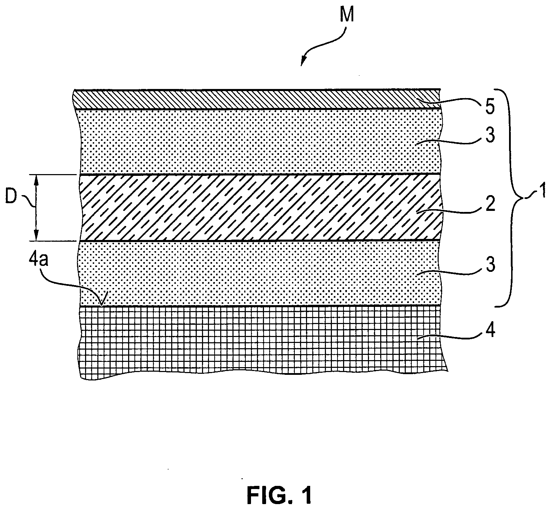

Weitere vorteilhafte Ausführungen der Erfindung sind in den Unteransprüchen und der nachfolgenden speziellen Beschreibung enthalten. Anhand mehrerer Ausführungs- und Vergleichsbeispiele wird unter Bezugnahme auf die Zeichnung die Erfindung dabei näher erläutert. Dabei zeigt die einzige
- Fig. 1: einen schematisierten perspektivischen Querschnitt durch ein erfindungsgemäßes Klebeband, welches mit einem Bauteil verklebt ist, wodurch eine vorkonfektionierte Montageeinheit gebildet ist.

Wie aus Fig. 1 hervorgeht, umfasst ein erfindungsgemäßes Klebeband 1, das in bevorzugter Ausführung als doppelseitiges Klebeband 1 ausgeführt ist, einen aus Kunststoff bestehenden, insbesondere bandförmigen Träger 2, der mindestens auf einer Seite - in der dargestellten Ausführung auf beiden Seiten - mit einer selbstklebenden Klebeschicht 3 versehen ist. Jede Klebeschicht 3 besteht aus einem druckempfindlichen Haftkleber, der als Hauptbestandteil ein UV-vernetzbares Acrylat enthält.

Der Träger 2 kann bevorzugt aus einer Polyvinylchlorid- oder aus Polyesterfolie bestehen und eine Dicke D im Bereich von 0,005 mm bis 0,5 mm, vorzugsweise im Bereich von 0,01 mm bis 0,3 mm, aufweisen.

Das erfindungsgemäße Klebeband 1 kann über die Klebeschichten 3 - wie dargestellt mit einem Bauteil 4 - oder bevorzugt auch mit mehreren Bauteilen 4 verklebt werden. Dadurch entsteht eine vorkonfektionierte Montageeinheit M.

In der zeichnerischen Darstellung ist dabei im oberen Teil exemplarisch gezeigt, dass die/jede Klebeschicht 3 mit einem, insbesondere aus Silikon oder aus silikonisiertem Papier bestehenden, sogenannten Interliner 5 abgedeckt sein kann, der bei der Herstellung eine Wickelung des Klebebandes 1 auf sich selbst ermöglicht, ohne dass dieses verblockt. Diese Interliner können entweder eine Folienbasis oder Papierbasis haben und sind beidseitig mit einer Silikonschicht auf Basis einer sogenannten Easy-Release- und/oder einer CR-Beschichtung (Controlled release) versehen. Je nach Beschichtungsverfahren und/oder Einsatzverfahren kann hier eine entsprechende Auswahl des Interliners mit der gewünschten Silikonkombination getroffen werden.

Das erfindungsgemäße Klebeband 1 kann in vorteilhafter Weise zur Endlos- oder Stückverklebung oder zur selbstklebenden Ausrüstung von Profilen, Kanälen, Spiegeln, Displays, Schildern, Skalen, Gehäusen sowie von Zier-, Dekorations-, Verblendungs- und Halteteilen eingesetzt werden, welche insbesondere unpolare Oberflächen 4a, wie z. B. aus Polyethylen (PE) oder Polypropylen (PP) bestehende Oberflächen 4a, aufweisen. Jedoch beschränkt sich der mögliche Einsatz eines erfindungsgemäßen Klebebandes 1 nicht auf diese Werkstoffe, sondern das Klebeband 1 kann als Montageklebeband - beispielsweise in der Möbelindustrie - auch zum Verkleben von Holzteilen oder - beispielsweise im Automobilbau - zum Verkleben von Metallteilen oder -folien eingesetzt werden. Dabei kann mit Vorteil auch auf der einen Seite ein erstes Bauteil 4 aus einem ersten Werkstoff und auf der anderen Seite ein zweites Bauteil 4 aus einem vom ersten unterschiedenen, zweiten Werkstoff aufgeklebt werden.

Zur Herstellung des erfindungsgemäßen Klebebandes 1 erfolgt eine Beschichtung des Trägers 2 mit verschiedenartig zusammengesetzten Haftklebern in der Klebeschicht 3. Als Beschichtungsart kann dabei eine direkte Beschichtung auf das Trägermaterial oder eine Transferbeschichtung vorgesehen werden, bei der der Kleber zunächst auf ein silikonisiertes Papier aufgebracht und anschließend auf den Träger 2 übertragen wird.

Als Vergleichsbeispiele wurden Klebebänder 1 mit den in Tabelle 1 genannten Rezepturen A und B für die Klebeschicht 3 hergestellt. Der Kleberauftrag betrug dabei jeweils einheitlich 60 g/m². Jedoch wurden jeweils zwei verschiedene Werte für die zur Vernetzung vorgesehene UV-C-Dosis vorgesehen - einmal 45 mJ/cm² und einmal 60 mJ/cm².

**Tabelle 1: Rezepturen der Vergleichsbeispiele**

| Rezepturbestandteil | Einheit | Rezeptur A | Rezeptur B |
|---|---|---|---|
| AcResin^{®} 250 | ph | 100 | 0 |
| AcResin^{®} 260 | phr | 0 | 100 |

Bei den beiden in Tabelle 1 und auch in den nachfolgenden Tabellen enthaltenen UV-vernetzbaren Acrylaten AcResin^{®} 250 und AcResin^{®} 260 handelt es sich um Produkte der Firma BASF mit einpolymerisierten Fotoinitiatoren, wie sie vorstehend beschrieben wurden. Die Angaben 250 und 260 beziehen sich dabei auf die bevorzugte optimale Wellenlänge in Nanometer, bei der ein Maximum der Vernetzung der genannten Präpolymere erreicht wird. Beide Produkte weisen bei Bestimmung bei 130 °C über eine Prüfdauer von 30 Minuten einen Gehalt an nichtflüchtigen Bestandteilen von mehr als 99 Masseprozent auf. Der sogenannte K-Wert - bestimmt nach DIN ISO 1628-1 in einprozentiger Tetrahydrofuran-Lösung - liegt im Bereich von 48 bis 52, die Dichte bei 1,06 g/cm³, die Glasübergangstemperatur, bestimmt nach der DSC-Methode, bei - 38 °C. Die Viskosität bei 130 °C gemessen gemäß EN ISO 3219, Anhang B an der Kegel-Platte-Vorrichtung bei einer Schergeschwindigkeit von 100 pro Sekunde liegt im Bereich von 30 mPas bis 70 mPas.

Für die mit diesen solchermaßen hergestellten Klebeschichten 3 ausgerüsteten Klebebänder 1 wurden nur die in den Tabellen 2a und 2b wiedergegebenen Klebkräfte und Scherfestigkeiten erreicht. Daraus kann insbesondere abgeleitet werden, dass es mit den nicht erfindungsgemäßen UV-vernetzbaren Klebern insbesondere nicht möglich war, die Scherfestigkeit bei 70 °C auf dem Wege einer Erhöhung der UV-Dosis über einen Wert von 800 Minuten anzuheben, da sich die Kohäsion der UV-vernetzbaren AcResin^{®}-Kleber durch erhöhte UV-C-Dosen nicht mehr steigern lässt.

**Tabelle 2a: Klebkräfte und Scherfestigkeiten der Vergleichsbeispiele (niedrige UV-C-Dosis)**

| Prüfung | Prüfmethode | Wartezeit | Einheit | Rezeptur A | Rezeptur B |
|---|---|---|---|---|---|
| Kleberauftrag | | | g/m² | 60 | 60 |
| UV-C-Dosis | | | mJ/cm² | 45 | 45 |
| Klebkraft auf Stahl | DIN EN 1939 | 10 min | N/cm | 10 | 8 |
| | | 24h | | 12 | 8 |
| Klebkraft auf PE | DIN EN 1939 | 10 min | N/cm | 1,5 | 1,0 |
| | | 24h | | 2,5 | 1,0 |
| Klebkraft auf PP | DIN EN 1939 | 10 min | N/cm | 3,5 | 1,5 |
| | | 24h | | 3,5 | 1,5 |
| Scherfestigkeit RT | DIN EN 1943 | 15 min | Min | >10.000 | >10.000 |
| Scherfestigkeit 70 °C | DIN EN 1943 | 15 min | Min | 250 | 500 |

**Tabelle 2b: Klebkräfte und Scherfestigkeiten der Vergleichsbeispiele (hohe UV-C-Dosis)**

| Prüfung | Prüfmethode | Wartezeit | Einheit | Rezeptur A | Rezeptur B |
|---|---|---|---|---|---|
| Kleberauftrag | | | g/m² | 60 | 60 |
| UV-C-Dosis | | | mJ/cm² | 65 | 65 |
| Klebkraft auf Stahl | DIN EN 1939 | 10 min 24h | N/cm | 10 12 | 7 8 |
| Klebkraft auf PE | DIN EN 1939 | 10 min | N/cm | 1,5 | 1,0 |
| | | 24h | | 2,5 | 1,0 |
| Klebkraft auf PP | DIN EN 1939 | 10 min | N/cm | 1,5 | 1,5 |
| | | 24h | | 2,5 | 1,5 |
| Scherfestigkeit RT | DIN EN 1943 | 15 min | Min | >10.000 | >10.000 |
| Scherfestigkeit 70 °C | DIN EN 1943 | 15 min | Min | 250 | 800 |

Erfindungsgemäß wurden dann Klebebänder 1 mit den in Tabelle 3 genannten Rezepturen 1 und 2 für die Klebeschichten 3 hergestellt. Der Kleberauftrag betrug dabei wiederum jeweils einheitlich 60 g/m². Für die zur Vernetzung vorgesehene UV-C-Dosis wurden 60 mJ/cm² vorgesehen.

**Tabelle 3: UV-Acrylat-Rezepturen mit pyrogener Kieselsäure (ohne Harz)**

| Rezepturbestandteil | Einheit | Rezeptur 1 | Rezeptur 2 |
|---|---|---|---|
| AcResin^{®} 250 | phr | 100 | 0 |
| AcResin^{®} 260 | phr | 0 | 100 |
| Aerosil^{®} R 972 | phr | 5 | 5 |

Bei dem in der Tabelle 3 genannten Aerosil^{®} R 972 handelt es sich um eine handelsübliche, mit DDS (Dimethyldichlorsilan) hydrophobierte pyrogene Kieselsäure der Firma Evonik Industries mit einer BET-Oberfläche von 110 ± 20 m²/g und einem pH-Wert in Wasser von 4,0 ± 0,4 sowie mit einem Kohlenstoffgehalt von 0,9 ± 0,3 Masseprozent.

Für die mit diesen solchermaßen erfindungsgemäß hergestellten Klebeschichten 3 ausgerüsteten Klebebänder 1 wurden die in Tabelle 4 wiedergegebenen Klebkräfte und Scherfestigkeiten erreicht.

Beim Vergleich mit den Werten der Vergleichsbeispiele in Tabelle 2b ist aus Tabelle 4 insbesondere die bei über 10.000 Minuten liegende hohe Scherfestigkeit bei 70 °C hervorzuheben.

Es wurden dann Klebebänder 1 mit den in Tabelle 5 aufgeführten Rezepturen 3 sowie 4a bis 4c für die Klebeschichten 3 hergestellt. Diesen Klebebändern 1, die keine pyrogene Kieselsäure enthalten, wird, wie oben ausgeführt, ebenfalls eine erfinderische Bedeutung zugemessen. Der Kleberauftrag betrug dabei wiederum jeweils einheitlich 60 g/m². Für die zur Vernetzung vorgesehene UV-C-Dosis wurden 60 mJ/cm² vorgesehen.

**Tabelle 4: Klebkräfte und Scherfestigkeiten von Klebebändern 1 mit Klebeschichten 3 nach den Rezepturen 1 und 2 (hohe UV-C-Dosis)**

| Prüfung | Prüfmethode | Wartezeit | Einheit | Rezeptur 1 | Rezeptur 2 |
|---|---|---|---|---|---|
| Kleberauftrag | | | g/m² | 60 | 60 |
| UV-Dosis | | | mJ/cm² | 65 | 65 |
| Klebkraft auf Stahl | DIN EN 1939 | 10 min | N/cm | 10 | 8,5 |
| | | 24h | | 12 | 9,0 |
| Klebkraft auf PE | DIN EN 1939 | 10 min | N/cm | 2,0 | 0,5 |
| | | 24h | | 2,5 | 0,5 |
| Klebkraft auf PP | DIN EN 1939 | 10 min | N/cm | 0,5 | 0,5 |
| | | 24h | | 0,5 | 0,5 |
| Scherfestigkeit RT | DIN EN 1943 | 15 min | min | >10.000 | >10.000 |
| Scherfestigkeit 70 °C | DIN EN 1943 | 15 min | min | >10.000 | >10.000 |

**Tabelle 5: UV-Acrylat-Rezepturen mit Harz (ohne pyrogene Kieselsäure)**

| Rezepturbestandteil | Einheit | Rezeptur 3 | Rezeptur 4a | Rezeptur 4b | Rezeptur 4c |
|---|---|---|---|---|---|
| AcResin^{®} 250 | phr | 100 | 0 | 0 | 0 |
| AcResin^{®} 260 | phr | 0 | 100 | 100 | 100 |
| Aerosil^{®} R 972 | phr | 0 | 0 | 0 | 0 |
| Escorez 1304 | phr | 5 | 5 | 0 | 0 |
| Foral 105 | phr | 0 | 0 | 5 | 0 |
| Kristalex F 100 | phr | 0 | 0 | 0 | 5 |

Die Herkunft und chemische Natur der in Tabelle 5 aufgeführten Harze Escorez 1304, Foral 105 und Kristalex F 100 wurden bereits vorstehend erläutert.

Für die mit diesen solchermaßen erfindungsgemäß hergestellten Klebeschichten 3 ausgerüsteten Klebebänder 1 wurden die in den Tabellen 6a und 6b wiedergegebenen Klebkräfte und Scherfestigkeiten erreicht. Beim Vergleich mit den Werten der Vergleichsbeispiele in Tabelle 2b ist aus den Tabellen 6a und 6b insbesondere die auf 2,5 N/cm und mehr erhöhte Klebkraft auf den apolaren polyolefinischen Oberflächen Polyethylen (PE) und Polypropylen (PP) hervorzuheben. Bezugnehmend auf den Vergleich zwischen der Rezeptur 1 und der Rezeptur 3 ist bei der Harzmodifikation ein deutlicher Scherfestigkeitsverlust bei 70° C, gemessen nach DIN EN 1943, zu beobachten. Ein ähnlicher Scherfestigkeitsverlust ist auch zwischen der Rezeptur 2 als Grundrezeptur und der Rezeptur 4a bei 70° C, gemessen nach DIN EN 1943, zu beobachten, da bei der Rezeptur 4a ebenfalls Harze zugesetzt worden sind.

**Tabelle 6a: Klebkräfte und Scherfestigkeiten von Klebebändern 1 mit Klebeschichten 3 nach den Rezepturen 3 und 4a (hohe UV-C-Dosis)**

| Prüfung | Prüfmethode | Wartezeit | Einheit | Rezeptur 3 | Rezeptur 4a |
|---|---|---|---|---|---|
| Kleberauftrag | | | g/m² | 60 | 60 |
| UV-Dosis | | | mJ/cm² | 65 | 65 |
| Klebkraft auf Stahl | DIN EN 1939 | 10 min | N/cm | 11 | 10,0 |
| | | 24h | | 12 | 10,5 |
| Klebkraft auf PE | DIN EN 1939 | 10 min | N/cm | 2,5 | 2,5 |
| | | 24h | | 3,0 | 3,0 |
| Klebkraft auf PP | DIN EN 1939 | 10 min | N/cm | 3,5 | 3,0 |
| | | 24h | | 4,0 | 3,0 |
| Scherfestigkeit RT | DIN EN 1943 | 15 min | min | >10.000 | >10.000 |
| Scherfestigkeit 70 °C | DIN EN 1943 | 15 min | min | 150 | 350 |

**Tabelle 6b: Klebkräfte und Scherfestigkeiten von Klebebändern 1 mit Klebeschichten 3 nach den Rezepturen 4b und 4c (hohe UV-C-Dosis)**

| Prüfung | Prüfmethode | Wartezeit | Einheit | Rezeptur 4b | Rezeptur 4c |
|---|---|---|---|---|---|
| Kleberauftrag | | | g/m² | 60 | 60 |
| UV-Dosis | | | mJ/cm² | 65 | 65 |
| Klebkraft auf Stahl | DIN EN 1939 | 10 min | N/cm | 10 | 10 |
| | | 24h | | 12 | 12 |
| Klebkraft auf PE | DIN EN 1939 | 10 min | N/cm | 4,0 | 1,0 |
| | | 24h | | 4,5 | 1,0 |
| Klebkraft auf PP | DIN EN 1939 | 10 min | N/cm | 2,5 | 0,5 |
| | | 24h | | 2,5 | 0,5 |
| Scherfestigkeit RT | DIN EN 1943 | 15 min | min | >10.000 | 5.000 |
| Scherfestigkeit 70 °C | DIN EN 1943 | 15 min | min | 200 | 50 |

Der Scherfestigkeitsvergleich bei 70° C, gemessen nach DIN EN 1943, zwischen Rezeptur 2 und Rezeptur 4b und 4c, zeigt wiederum einen deutlichen Scherfestigkeitsverlust, sobald Harze zu den acResin Klebern zugegeben werden.

Schließlich wurden dann erfindungsgemäß noch weitere Klebebänder 1 mit den in den Tabellen 7a und 7b genannten Rezepturen 5 bis 10 für die Klebeschichten 3 hergestellt. Der Kleberauftrag betrug auch hier jeweils einheitlich 60 g/m², und die Vernetzung erfolgte mit einer UV-C-Dosis von 60 mJ/cm².

**Tabelle 7a: UV-Acrylat mit pyrogener Kieselsäure und Harz (Rezepturen 5 bis 7)**

| Rezepturbestandteil | Einheit | Rezeptur 5 | Rezeptur 6 | Rezeptur 7 |
|---|---|---|---|---|
| AcResin® 250 | phr | 100 | 100 | 100 |
| Aerosil® R 972 | phr | 5 | 5 | 5 |
| Escorez 1304 | phr | 5 | 0 | 0 |
| Foral 105 | phr | 0 | 5 | 0 |
| Kristalex F 100 | phr | 0 | 0 | 5 |

**Tabelle 7b: UV-Acrylat mit pyrogener Kieselsäure und Harz (Rezepturen 8 bis 10)**

| Rezepturbestandteil | Einheit | Rezeptur 8 | Rezeptur 9 | Rezeptur 10 |
|---|---|---|---|---|
| AcResin^{®} 260 | phr | 100 | 100 | 100 |
| Aerosil^{®} R 972 | phr | 5 | 5 | 5 |
| Escorez 1304 | phr | 5 | 0 | 0 |
| Foral 105 | phr | 0 | 5 | 0 |
| Kristalex F 100 | phr | 0 | 0 | 5 |

Für die mit diesen solchermaßen erfindungsgemäß hergestellten Klebeschichten 3 ausgerüsteten Klebebänder 1 wurden die in den Tabellen 8a bis 8c wiedergegebenen Klebkräfte und Scherfestigkeiten erreicht. Beim Vergleich mit den Werten der Vergleichsbeispiele in Tabelle 2b ist aus den genannten Tabellen dabei insbesondere sowohl die auf ein Mehrfaches erhöhte Klebkraft auf den apolaren polyolefinischen Oberflächen Polyethylen (PE) und Polypropylen (PP), als auch die extremal hohe Scherfestigkeit bei 70 °C hervorzuheben.

**Tabelle 8a: Klebkräfte und Scherfestigkeiten von Klebebändern 1 mit Klebeschichten 3 nach den Rezepturen 5 und 6 (hohe UV-C-Dosis)**

| Prüfung | Prüfmethode | Wartezeit | Einheit | Rezeptur 5 | Rezeptur 6 |
|---|---|---|---|---|---|
| Kleberauftrag | | | g/m² | 60 | 60 |
| UV-Dosis | | | mJ/cm² | 65 | 65 |
| Klebkraft auf Stahl | DIN EN | 10 min | N/cm | 12 | 16 |
| | 1939 | 24h | | 12 | 17 |
| Klebkraft auf PE | DIN EN | 10 min | N/cm | 2,0 | 4,0 |
| | 1939 | 24h | | 2,0 | 4,5 |
| Klebkraft auf PP | DIN EN | 10 min | N/cm | 1,0 | 2,0 |
| | 1939 | 24h | | 2,0 | 2,0 |
| Scherfestigkeit RT | DIN EN 1943 | 15 min | min | 2.500 | >10.000 |
| Scherfestigkeit 70 °C | DIN EN 1943 | 15 min | min | 250 | 200 |

**Tabelle 8b: Klebkräfte und Scherfestigkeiten von Klebebändern 1 mit Klebeschichten 3 nach den Rezepturen 7 und 8 (hohe UV-C-Dosis)**

| Prüfung | Prüfmethode | Wartezeit | Einheit | Rezeptur 7 | Rezeptur 8 |
|---|---|---|---|---|---|
| Kleberauftrag | | | g/m² | 60 | 60 |
| UV-Dosis | | | mJ/cm² | 65 | 65 |
| Klebkraft auf | DIN EN | 10 min | N/cm | 11,5 | 12 |
| Stahl | 1939 | 24h | | 13,5 | 12 |
| Klebkraft auf | DIN EN | 10 min | N/cm | 1,5 | 2,5 |
| PE | 1939 | 24h | | 2,0 | 3,5 |
| Klebkraft auf | DIN EN | 10 min | N/cm | 0,5 | 2,0 |
| PP | 1939 | 24h | | 0,5 | 3,0 |
| Scherfestigkeit RT | DIN EN 1943 | 15 min | min | >10.000 | >10.000 |
| Scherfestigkeit 70 °C | DIN EN 1943 | 15 min | min | >10.000 | >10.000 |

**Tabelle 8c: Klebkräfte und Scherfestigkeiten von Klebebändern 1 mit Klebeschichten 3 nach den Rezepturen 9 und 10 (hohe UV-C-Dosis)**

| Prüfung | Prüfmethode | Wartezeit | Einheit | Rezeptur 9 | Rezeptur 10 |
|---|---|---|---|---|---|
| Kleberauftrag | | | g/m² | 60 | 60 |
| UV-Dosis | | | mJ/cm² | 65 | 65 |
| Klebkraft auf | DIN EN | 10 min | N/cm | 13,5 | 10,0 |
| Stahl | 1939 | 24h | | 15,0 | 12,0 |
| Klebkraft auf | DIN EN | 10 min | N/cm | 4,0 | 1,0 |
| PE | 1939 | 24h | | 4,5 | 1,0 |
| Klebkraft auf | DIN EN | 10 min | N/cm | 2,5 | 0,5 |
| PP | 1939 | 24h | | 2,5 | 0,5 |
| Scherfestigkeit RT | DIN EN 1943 | 15 min | min | >10.000 | >10.000 |
| Scherfestigkeit 70°C | DIN EN 1943 | 15 min | min | 1000 | 500 |

### Bezugszeichen

- 1: Klebeband
- 2: Träger von 1
- 3: Klebebeschichtung auf 2
- 4: Bauteil
- 4a: Oberfläche von 4
- 5: Interliner

- M: vorkonfektionierte Einheit aus 1 und 4

## Patentansprüche

1. Klebeband (1), insbesondere doppelseitiges Klebeband (1), mit einem aus Kunststoff bestehenden Träger (2), der mindestens auf einer Seite mit einer selbstklebenden Klebeschicht (3) versehen ist, die aus einem druckempfindlichen Haftkleber besteht, wobei der druckempfindliche Haftkleber pulverförmiges nanoskaliges Siliciumdioxid enthält und wobei der aus Kunststoff bestehende Träger (2) als Folie ausgeführt ist,
**dadurch gekennzeichnet, dass** der druckempfindliche Haftkleber ein vernetztes Polyacrylat aus einem lösungsmittelfreien UV-vernetzbaren Acrylat mit einpolymerisiertem Fotoinitiator als Hauptbestandteil für eine Vernetzungsreaktion enthält, wobei der Gehalt an Siliciumdioxid - bezogen auf das UV-vernetzbare Acrylat - im Bereich von 1 phr bis 20 phr liegt und wobei der Kleberauftrag der selbstklebenden Klebeschicht (3) im Bereich von 20 g/m² bis 100 g/m² liegt.

2. Klebeband (1) nach Anspruch 1,
**dadurch gekennzeichnet, dass** Teilchen des pulverförmigen Siliciumdioxids eine mittlere Größe im Bereich von 5 nm bis 250 nm, vorzugsweise im Bereich von 10 nm bis 80 nm, aufweisen.

3. Klebeband (1) nach Anspruch 1 oder 2,
**dadurch gekennzeichnet, dass** das pulverförmige Siliciumdioxid eine BET-Oberfläche im Bereich von 50 m²/g bis 500 m²/g, vorzugsweise im Bereich von 80 m²/g bis 200 m²/g, aufweist.

4. Klebeband (1) nach einem der Ansprüche 1 bis 3,
**dadurch gekennzeichnet, dass** das pulverförmige Siliciumdioxid pyrogen aus einem Chlorsilan, wie Siliciumtetrachlorid SiCl₄, oder durch Zerstäubung von Quarzsand im elektrischen Lichtbogen hergestellt ist.

5. Klebeband (1) nach einem der Ansprüche 1 bis 4,
**dadurch gekennzeichnet, dass** der Gehalt an Siliciumdioxid - bezogen auf das UV-vernetzbare Acrylat - im Bereich von 2 phr bis 10 phr liegt.

6. Klebeband (1) nach einem der Ansprüche 1 bis 5,
**dadurch gekennzeichnet, dass** das Siliciumdioxid, insbesondere durch eine Oberflächenbehandlung mit Organosilanen, wie beispielsweise mit Dimethyldichlorsilan, Hexamethyldisilazan, Methacryloxypropyltrimethoxysilan, Octyltrimethoxysilan, Polysiloxan, Hexadecyltrimethoxysilan, hydrophobisiert ist.

7. Klebeband (1) nach einem der Ansprüche 1 bis 6,
**dadurch gekennzeichnet, dass** der Träger (2) aus Polyvinylchlorid oder aus Polyester besteht.

8. Klebeband (1) nach einem der Ansprüche 1 bis 7,
**dadurch gekennzeichnet, dass** der Träger (2) eine Dicke im Bereich von 0,005 mm bis 0,5 mm, vorzugsweise im Bereich von 0,01 mm bis 0,3 mm, aufweist.

9. Klebeband (1) nach einem der Ansprüche 1 bis 8,
**dadurch gekennzeichnet, dass** der Träger (2) auf beiden Seiten mit einer selbstklebenden Klebeschicht (3) versehen ist.

10. Klebeband (1) nach einem der Ansprüche 1 bis 9,
**dadurch gekennzeichnet, dass** der druckempfindliche Kleber mit klebrigmachenden Harzen, wie Pinen-, Inden- und/oder Kolophoniumharzen, deren disproportionierten, hydrierten, polymerisierten, veresterten Derivaten und/oder Salzen und/oder Terpen- und/oder Terpenphenolharzen und/oder aliphatischen, aromatischen, alkylaromatischen Kohlenwasserstoffharzen, insbesondere mit einem oder mehreren C5- bis C9- Kohlenwasserstoffharz(en), modifiziert ist.

11. Klebeband (1) nach Anspruch 10,
**dadurch gekennzeichnet, dass** der Harzgehalt - bezogen auf das UV-vernetzbare Acrylat - im Bereich von 1 phr bis 50 phr, vorzugsweise im Bereich von 2 phr bis 10 phr, liegt.

12. Klebeband (1) nach einem der Ansprüche 1 bis 11,
**dadurch gekennzeichnet, dass** die/jede Klebeschicht (3) jeweils mit einer UV-C-Dosis im Bereich von 5 mJ/cm² bis 135 mJ/cm², vorzugsweise im Bereich von 25 mJ/cm² bis 80 mJ/cm², vernetzt ist.

13. Klebeband (1) nach einem der Ansprüche 1 bis 12,
**dadurch gekennzeichnet, dass** die Klebkraft auf unpolaren Oberflächen, wie auf Polyethylen- oder Polypropylenoberflächen, gemessen nach DIN EN 1939 nach einer Wartezeit von 10 Minuten und/oder nach einer Wartezeit von 24 Stunden mindestens 2,0 N/cm beträgt und vorzugsweise im Bereich von 3,0 N/cm bis 10,0 N/cm liegt.

14. Klebeband (1) nach einem der Ansprüche 1 bis 13,
**dadurch gekennzeichnet, dass** die Klebkraft auf Stahl gemessen nach DIN EN 1939 nach einer Wartezeit von 10 Minuten und/oder nach einer Wartezeit von 24 Stunden im Bereich von 6,0 bis 18,0 N/cm, vorzugsweise im Bereich von 7,0 bis 15,0 N/cm liegt.

15. Klebeband (1) nach einem der Ansprüche 1 bis 14,
**dadurch gekennzeichnet, dass** die Scherfestigkeit gemessen nach DIN EN 1943 nach einer Wartezeit von 15 Minuten, sowohl bei Raumtemperatur, als auch bei 70 °C, im Bereich von 250 Minuten bis 10000 Minuten liegt oder vorzugsweise 10.000 Minuten übersteigt.

16. Klebeband (1) nach einem der Ansprüche 1 bis 15,
**dadurch gekennzeichnet, dass** die/jede Klebeschicht (3) mit einem silikonisierten Interliner abgedeckt ist, insbesondere mit einem silikonisierten Papier oder mit einer silikonisierten Folie oder mit einem silikonisierten, mit Polyethylen befilmten Papier.

17. Verwendung eines Klebebandes (1) nach einem der Ansprüche 1 bis 16 zum Bekleben mindestens eines Bauteils (4) mit unpolarer Oberfläche (4a).

## Claims

1. Adhesive tape (1), more particularly double-sided adhesive tape (1), having a carrier (2) which consists of plastic and is provided at least on one side with a self-adhesive layer (3) which consists of a pressure-sensitive adhesive, the pressure-sensitive adhesive comprising pulverulent nanoscale silicon dioxide, and the plastic carrier (2) being configured as a sheet,
**characterized in that** the pressure-sensitive adhesive comprises a crosslinked polyacrylate composed of a solvent-free, UV-crosslinkable acrylate with copolymerized photoinitiator as major constituent for a crosslinking reaction, the amount of silicon dioxide being in the range from 1 phr to 20 phr, based on the UV-crosslinkable acrylate, and the adhesive coatweight of the self-adhesive layer (3) being in the range from 20 g/m² to 100 g/m².

2. Adhesive tape (1) according to Claim 1,
**characterized in that** particles of the pulverulent silicon dioxide have an average size in the range from 5 nm to 250 nm, preferably in the range from 10 nm to 80 nm.

3. Adhesive tape (1) according to Claim 1 or 2,
**characterized in that** the pulverulent silicon dioxide has a BET surface area in the range from 50 m²/g to 500 m²/g, preferably in the range from 80 m²/g to 200 m²/g.

4. Adhesive tape (1) according to any of Claims 1 to 3,
**characterized in that** the pulverulent silicon dioxide is produced pyrogenically from a chlorosilane, such as silicon tetrachloride SiCl₄, or by atomization of silica sand in an electric arc.

5. Adhesive tape (1) according to any of Claims 1 to 4,
**characterized in that** the amount of silicon dioxide is in the range from 2 phr to 10 phr, based on the UV-crosslinkable acrylate.

6. Adhesive tape (1) according to any of Claims 1 to 5,
**characterized in that** the silicon dioxide is hydrophobized, in particular by surface treatment with organosilanes, as for example with dimethyldichlorosilane, hexamethyldisilazane, methacryloyloxypropyltrimethoxysilane, octyltrimethoxysilane, polysiloxane, hexadecyltrimethoxysilane.

7. Adhesive tape (1) according to any of Claims 1 to 6,
**characterized in that** the carrier (2) consists of polyvinyl chloride or of polyester.

8. Adhesive tape (1) according to any of Claims 1 to 7,
**characterized in that** the carrier (2) has a thickness in the range from 0.005 mm to 0.5 mm, preferably in the range from 0.01 mm to 0.3 mm.

9. Adhesive tape (1) according to any of Claims 1 to 8,
**characterized in that** the carrier (2) is provided on both sides with a self-adhesive layer (3).

10. Adhesive tape (1) according to any of Claims 1 to 9,
**characterized in that** the pressure-sensitive adhesive is modified with tackifying resins, such as pinene resins, indene resins and/or rosins, their disproportionated, hydrogenated, polymerized, esterified derivatives and/or salts and/or terpene resins and/or terpene-phenolic resins and/or aliphatic, aromatic, alkylaromatic hydrocarbon resins, more particularly with one or more C5 to C9 hydrocarbon resins.

11. Adhesive tape (1) according to Claim 10,
**characterized in that** the resin content is in the range from 1 phr to 50 phr, preferably in the range from 2 phr to 10 phr, based on the UV-crosslinkable acrylate.

12. Adhesive tape (1) according to any of Claims 1 to 11,
**characterized in that** the/each adhesive layer (3) is crosslinked in each case with a UV-C dose in the range from 5 mJ/cm² to 135 mJ/cm², preferably in the range from 25 mJ/cm² to 80 mJ/cm².

13. Adhesive tape (1) according to any of Claims 1 to 12,
**characterized in that** the peel adhesion on apolar surfaces, such as on polyethylene or polypropylene surfaces, measured according to DIN EN 1939 after a waiting time of 10 minutes and/or after a waiting time of 24 hours, is at least 2.0 N/cm and is preferably in the range from 3.0 N/cm to 10 N/cm.

14. Adhesive tape (1) according to any of Claims 1 to 13,
**characterized in that** the peel adhesion on steel surfaces, measured according to DIN EN 1939 after a waiting time of 10 minutes and/or after a waiting time of 24 hours, is in the range from 6.0 to 18.0 N/cm, preferably in the range from 7.0 N/cm to 15 N/cm.

15. Adhesive tape (1) according to any of Claims 1 to 14,
**characterized in that** the shear adhesion measured according to DIN EN 1943 after a waiting time of 15 minutes, both at room temperature and at 70°C, is in the range from 250 minutes to 10000 minutes or preferably exceeds 10000 minutes.

16. Adhesive tape (1) according to any of Claims 1 to 15,
**characterized in that** the/each adhesive layer (3) is lined with a siliconized interliner, more particularly with a siliconized paper or with a siliconized film or with a siliconized paper having a polyethylene film coating.

17. Use of an adhesive tape (1) according to any of Claims 1 to 16 for sticking to at least one component (4) having an apolar surface (4a).

## Revendications

1. Ruban adhésif (1), en particulier ruban adhésif double face (1), comprenant un support (2) constitué d'un matériau plastique, qui au moins sur une face est pourvu d'une couche adhésive autocollante (3), qui est constituée d'un adhésif de contact sensible à la pression, l'adhésif de contact sensible à la pression contenant du dioxyde de silicium nanométrique pulvérulent, et le support (2) constitué d'un matériau plastique étant conçu sous forme d'une feuille, **caractérisé en ce que** l'adhésif de contact sensible à la pression contient un polyacrylate réticulé, constitué d'un acrylate réticulable aux UV, sans solvant, avec un photo-amorceur polymérisé servant de constituant principal pour une réaction de réticulation, la teneur en dioxyde de silicium - par rapport à l'acrylate réticulable aux UV - étant comprise dans la plage de 1 phr à 20 phr, et la masse surfacique appliquée de la couche adhésive autocollante (3) étant comprise dans la plage de 20 g/m² à 100 g/m².

2. Ruban adhésif (1) selon la revendication 1, **caractérisé en ce que** les particules du dioxyde de silicium pulvérulent présentent une granulométrie moyenne comprise dans la plage de 5 nm à 250 nm, de préférence dans la plage de 10 nm à 80 nm.

3. Ruban adhésif (1) selon la revendication 1 ou 2, **caractérisé en ce que** le dioxyde de silicium pulvérulent présente une aire BET comprise dans la plage de 50 m²/g à 500 m²/g, de préférence dans la plage de 80 m²/g à 200 m²/g.

4. Ruban adhésif (1) selon l'une des revendications 1 à 3, **caractérisé en ce que** le dioxyde de silicium pulvérulent est fabriqué par voie pyrogène à partir d'un chlorosilane tel que le tétrachlorure de silicium (SiCl₄) ou par atomisation de sable quartzeux dans un arc électrique.

5. Ruban adhésif (1) selon l'une des revendications 1 à 4, **caractérisé en ce que** la teneur en dioxyde de silicium - par rapport à l'acrylate réticulable aux UV - est comprise dans la plage de 2 phr à 10 phr.

6. Ruban adhésif (1) selon l'une des revendications 1 à 5, **caractérisé en ce que** le dioxyde de silicium est hydrophobisé en particulier par un traitement de surface avec des organosilanes tels que par exemple le diméthyldichlorosilane, l'hexaméthyldisilazane, le méthacryloxypropyltriméthoxysilane, l'octyltriméthoxysilane, le polysiloxane, l'hexadécyltriméthoxysilane.

7. Ruban adhésif (1) selon l'une des revendications 1 à 6, **caractérisé en ce que** le support (2) est constitué de poly(chlorure de vinyle) ou d'un polyester.

8. Ruban adhésif (1) selon l'une des revendications 1 à 7, **caractérisé en ce que** le support (2) présente une épaisseur comprise dans la plage de 0, 005 mm à 0,5 mm, de préférence dans la plage de 0,01 mm à 0,3 mm.

9. Ruban adhésif (1) selon l'une des revendications 1 à 8, **caractérisé en ce que** le support (2) est pourvu sur ses deux faces d'une couche adhésive (3) autocollante.

10. Ruban adhésif (1) selon l'une des revendications 1 à 9, **caractérisé en ce que** l'adhésif sensible à la pression est modifié par des résines donnant du collant, telles que les résines de pinène, d'indène et/ou de colophane, les dérivés et/ou sels de ceux-ci, dismutés, hydrogénés, polymérisés, estérifiés, et/ou les résines de terpène et/ou de terpènephénol et/ou les résines hydrocarbonées aliphatiques, aromatiques, alkylaromatiques, en particulier une ou plusieurs résines à base d'hydrocarbures en C5 à C9.

11. Ruban adhésif (1) selon la revendication 10, **caractérisé en ce que** la teneur en résine - par rapport à l'acrylate réticulable aux UV - est comprise dans la plage de 1 phr à 50 phr, de préférence dans la plage de 2 phr à 10 phr.

12. Ruban adhésif (1) selon l'une des revendications 1 à 11, **caractérisé en ce que** la/chaque couche adhésive (3) est réticulée avec une dose d'UV-C comprise dans la plage de 5 mJ/cm² à 135 mJ/cm², de préférence dans la plage de 25 mJ/cm² à 80 mJ/cm².

13. Ruban adhésif (1) selon l'une des revendications 1 à 12, **caractérisé en ce que** la force d'adhérence sur des surfaces apolaires, telles que des surfaces de polyéthylène ou de polypropylène, mesurée selon DIN EN 1939 après un temps d'attente de 10 minutes et/ou après un temps d'attente de 24 heures, est d'au moins 2,0 N/cm, et de préférence est comprise dans la plage de 3,0 N/cm à 10,0 N/cm.

14. Ruban adhésif (1) selon l'une des revendications 1 à 13, **caractérisé en ce que** la force d'adhérence sur acier, mesurée selon DIN EN 1939 après un temps d'attente de 10 minutes et/ou après un temps d'attente de 24 heures, est comprise dans la plage de 6,0 à 18,0 N/cm, de préférence dans la plage de 7,0 à 15,0 N/cm.

15. Ruban adhésif (1) selon l'une des revendications 1 à 14, **caractérisé en ce que** la résistance au cisaillement, mesurée selon DIN EN 1943, après un temps d'attente de 15 minutes, tant à la température ambiante qu'à 70°C, est comprise dans la plage de 250 minutes à 10 000 minutes, ou de préférence dépasse 10 000 minutes.

16. Ruban adhésif (1) selon l'une des revendications 1 à 15, **caractérisé en ce que** la/chaque couche adhésive (3) est revêtue d'une couche intermédiaire siliconée, en particulier d'un papier siliconé ou d'une feuille siliconée ou d'un papier siliconé pelliculé de polyéthylène.

17. Utilisation d'un ruban adhésif (1) selon l'une des revendications 1 à 16 pour coller au moins un composant (4) à une surface apolaire (4a).
